# EUROPEAN PATENT APPLICATION

(11) **EP 4 497 566 A1**
(43) Date of publication of application: **29.01.2025**
(21) Application number: 22933677.1
(22) Date of filing: 22.12.2022
(51) Int. Cl.: B29C 48/08, B29C 48/25, B29C 48/305, B29C 48/88

(54) **METHOD FOR STARTING UP RESIN SHEET EXTRUSION DEVICE**

(30) Priority: 23.03.2022 JP 2022046266
(71) Applicant: Hitachi Zosen Corporation, Osaka-shi, Osaka 559-8559 (JP)
(72) Inventor: FUJIOKA Shuji, Osaka-shi, Osaka 559-8559 (JP); SUZUKAWA Masahiro, Osaka-shi, Osaka 559-8559 (JP); LEE Yuta, Osaka-shi, Osaka 559-8559 (JP); ETO Tasuku, Osaka-shi, Osaka 559-8559 (JP); ISAGO Ryuta, Osaka-shi, Osaka 559-8559 (JP)
(74) Representative: Grünecker Patent- und Rechtsanwälte PartG mbB
(86) International application number: PCT/JP2022/047294
(87) International publication number: WO 2023/181550

(57) **Abstract**

A melted resin is extruded in a sheet form from a die 19 of an extrusion device 11. A resin sheet 12 extruded is passed through a roll-type sheet forming machine 23 in a forming device 14, and a sheet-shaped product is thereby formed. At that time, a lead film 34 is set on the roll-type sheet forming machine 23 in advance, the lead film 34 being conveyed forward by rotation of forming rolls 28 in the roll-type sheet forming machine 23, and the resin sheet 12 guided to the sheet forming machine 23 attaches to the lead film 34.

## Description

### Technical Field

The present invention relates to a method for starting up a device for extruding resin sheet.

### Background Art

For example, JPH11-115034A discloses a device and a method for extruding a melted resin in a sheet form from a die of an extrusion device and forming the extruded resin sheet into a sheet-shaped product by passing the extruded resin sheet through a roll-type sheet forming machine of a forming device.

With such a device and a method, it is difficult to extrude a resin sheet having stable properties from the die immediately after the start of operation of the device. Therefore, the part of the resin sheet extruded before the properties of the resin sheet become stable does not have a required quality as a product and cannot be used for products. The part of the resin sheet needs to be removed from the manufacturing line.

In a known manufacturing process, immediately after the start of operation of the device, the resin sheet extruded from the die is not fed to the forming device but is received by an appropriate receiver. After the properties of the resin sheet become stable, a human worker cuts the resin sheet and moves the receiver from the position where the receiver receives the resin sheet from the die. Furthermore, the human worker moves the forming device to the position of the receiver moved, and passes the resin sheet with the part having unstable properties cut and removed along a plurality of rolls of the forming device.

### Summary of Invention

### Technical Problem

However, the resin sheet immediately after being extruded from the die has a high temperature of 70°C to 450°C, and it is difficult for a human worker to cut such a resin sheet. In addition, handling the resin sheet in the melted state continuously extruded from the die after the part of the resin sheet having unstable properties is cut off requires a considerable skill. Furthermore, a plurality of human workers are required to move the forming device to the vicinity of the die, start the operation of the forming device and then feed the resin sheet into the forming device. Such an operation often entails danger. In such an operation, since the resin is continuously discharged or extruded from the die, the device cannot be stopped in the process even if a trouble such as losing balance occurs.

An object of the present invention is to solve such problems and enable a device for extruding resin sheet to be easily and safely started up.

### Solution to Problem

To attain the object, in a method for starting up a device for extruding resin sheet according to the present invention,
when a melted resin is extruded in a sheet form from a die of an extrusion device, and a resin sheet extruded is passed through a roll-type sheet forming machine in a forming device to form a sheet-shaped product,
a lead film is set on the roll-type sheet forming machine in advance, the lead film being conveyed forward by a rotation of a forming roll in the roll-type sheet forming machine, and the resin sheet guided to the sheet forming machine attaches to the lead film.

In the method for starting up a device for extruding resin sheet according to the present invention, preferably,
a part of the resin sheet extruded from the die that is not appropriate to be passed through the sheet forming machine is received by a sheet receiving device,
the part of the resin sheet received by the sheet receiving device is cut and removed, and a remaining part of the resin sheet remaining after the cutting is guided to the sheet forming machine.

In the method for starting up a device for extruding resin sheet according to the present invention, preferably, the sheet receiving device receiving the resin sheet is lowered to stretch downward the resin sheet being extruded downward from the die to thin the resin sheet.

In the method for starting up a device for extruding resin sheet according to the present invention, preferably, the die from which the resin sheet is being extruded is relatively moved with respect to the sheet receiving device and the roll-type sheet forming machine from a position above the sheet receiving device to a position above the roll-type sheet forming machine to bring the resin sheet into contact with a cutting device to cut the resin sheet.

In the method for starting up a device for extruding resin sheet according to the present invention, preferably, a cover provided on the forming device prevents the cut and removed part of the resin sheet from attaching to the forming roll of the forming device.

In the method for starting up a device for extruding resin sheet according to the present invention, preferably, a lead film reinforced in a direction of sheet conveyance of the roll-type sheet forming machine is used as the lead film.

A manufacturing device for manufacturing a sheet-shaped resin product according to the present invention includes:
an extrusion device provided with a die from which a melted resin is extruded in a sheet form; and
a roll-type sheet forming machine that forms the extruded resin sheet into a sheet-shaped product,
wherein a lead film can be set on the roll-type sheet forming machine in advance, the lead film being conveyed forward by a rotation of a forming roll in the sheet forming machine, and the resin sheet received by the roll-type sheet forming machine attaching to the lead film.

Preferably, the manufacturing device for manufacturing a sheet-shaped resin product according to the present invention includes:
a sheet receiving device that receives a part of the resin sheet extruded from the die that is not appropriate to be passed through the sheet forming machine; and
a cutting device that cuts and removes the part of the resin sheet received by the sheet receiving device,
the die is capable of being relatively moved with respect to the sheet receiving device and the roll-type sheet forming machine from a position above the sheet receiving device to a position above the roll-type sheet forming machine, and
the roll-type sheet forming machine receives a remaining part of the resin sheet that remains after the part of the resin sheet that is not appropriate to be passed through the sheet forming machine is cut and removed by the cutting device.

In the manufacturing device for a sheet-shaped resin product according to the present invention, preferably, while receiving the resin sheet, the sheet receiving device is lowered to stretch downward the resin sheet being extruded downward from the die to thin the resin sheet.

In the manufacturing device for manufacturing a sheet-shaped resin product according to the present invention, preferably, the cutting device is disposed at a position where the extruded resin sheet comes into contact with the cutting device while the die is relatively moved with respect to the sheet receiving device and the roll-type sheet forming machine from the position above the sheet receiving device to the position above the roll-type sheet forming machine.

In the manufacturing device for manufacturing a sheet-shaped resin product according to the present invention, preferably, the forming device includes a cover that prevents the cut and removed part of the resin sheet from attaching to the forming roll of the forming device.

In the manufacturing device for manufacturing a sheet-shaped resin product according to the present invention, preferably, a lead film reinforced in a direction of sheet conveyance of the roll-type sheet forming machine can be set on the roll-type sheet forming machine in advance.

### Advantageous Effects of Invention

According to the present invention, a device for extruding resin sheet can be started up easily without the need of manpower and thus safely.

### Brief Description of the Drawings

FIG. 1 is a front view of a device for extruding a sheet-shaped resin product according to an embodiment of the present invention, illustrating a method for starting up the device for extruding resin sheet according to an embodiment of the present invention.
FIG. 2 is a diagram showing a subsequent process to the process in FIG. 1.
FIG. 3 is a diagram showing a subsequent process to the process in FIG. 2.
FIG. 4 is a diagram showing a subsequent process to the process in FIG. 3.
FIG. 5 is a perspective view showing a three-dimensional configuration of essential parts in the device shown in FIG. 1.
FIG. 6 is a diagram showing a subsequent process to a process shown in FIG. 5.
FIG. 7 is a diagram showing a subsequent process to the process in FIG. 6.
FIG. 8 is a diagram showing a subsequent process to the process in FIG. 7.
FIG. 9 is a diagram showing a subsequent process to the process in FIG. 8.
FIG. 10 is a three-dimensional view showing a general configuration of the device for extruding a sheet-shaped resin product according to the embodiment of the present invention.
FIG. 11 is a diagram showing another example configuration of the device for extruding a sheet-shaped resin product according to the embodiment of the present invention.

### Description of Embodiments

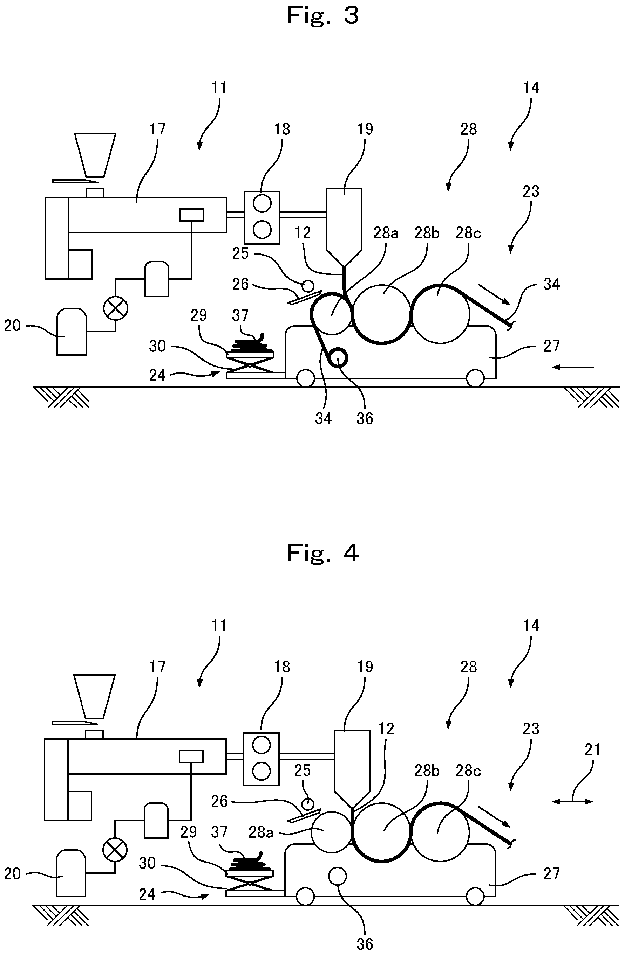

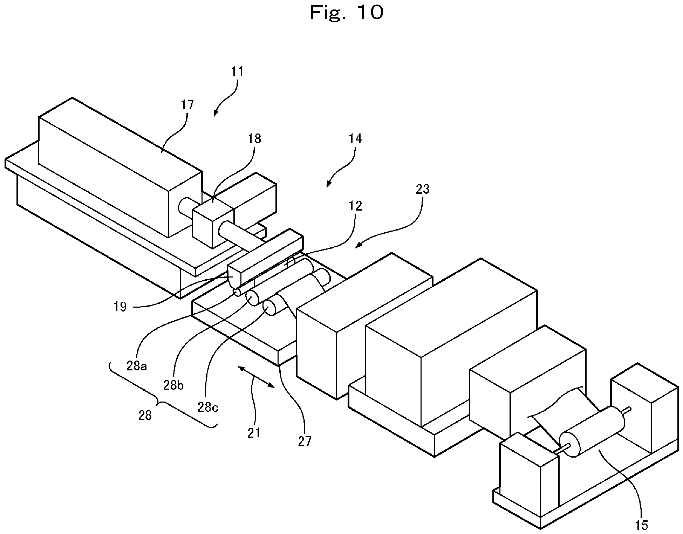

FIGS. 10 and 4 show a device for extruding a sheet-shaped resin product. The device includes an extrusion device 11 that melts and kneads a resin and extrudes the resin in a sheet form, a forming device 14 that passes a resin sheet 12 extruded from the extrusion device 11 through a roll-type sheet forming machine 23 to form a sheet-shaped product, and a winding device 15 that winds the resulting sheet-shaped product into a roll form, which is shown only in FIG. 10. Instead of the winding device 15, a cutting device that cuts the sheet into leaves may be provided. The resin sheet 12 referred to herein is not limited to the sheet form as far as the resin sheet 12 is flexible and may be a film, a stack of films or the like.

The extrusion device 11 includes an extruder 17 that melts and kneads a resin to be formed, a feeding device 18, such as a gear pump, that feeds downstream the melted resin extruded from the extruder 17, and a die 19 that extrudes downward the melted resin from the feeding device 18 in a sheet form. The extruder 17 is provided with a vacuum pump 20 for degassing the melted and kneaded resin. When the degassing is not needed, the vacuum pump 20 can be omitted.

As shown in FIG. 4, the forming device 14 can move back and forth in a horizontal direction 21, which is the same direction as the direction in which the resin sheet 12 is conveyed in a forming process shown in FIG. 10. The movable forming device 14 includes the roll-type sheet forming machine 23 that forms the resin sheet 12 extruded from the die 19 into a sheet-shaped product, a sheet receiving device 24 that receives a part of the resin sheet 12 that is extruded from the die 19 immediately after the start of operation and has unstable properties, a cutting device 25 that acts on the resin sheet 12 extruded from the die 19 after the properties have become stable and cuts and removes the part of the resin sheet 12 having unstable properties, and a cover 26 provided in the vicinity of the cutting device 25.

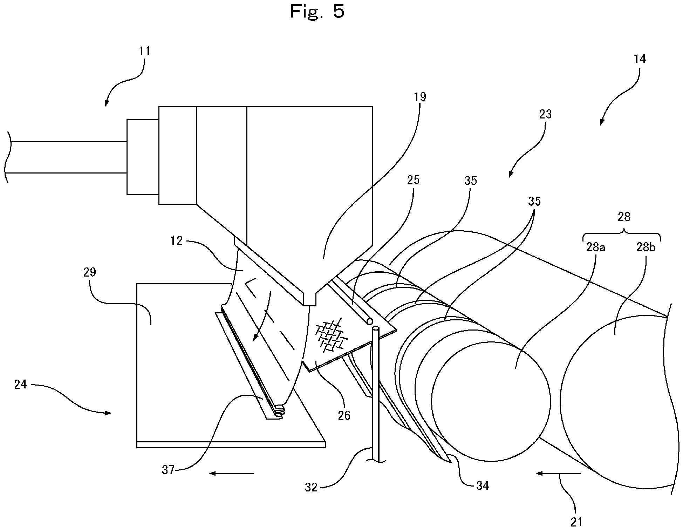

The structure of the forming device 14 will be described in detail with reference to FIGS. 4 and 5. The movable forming device 14 is configured as a transfer cart 27, on which the sheet forming machine 23, the sheet receiving device 24, the cutting device 25 and the cover 26 are mounted. The sheet forming machine 23, the sheet receiving device 24, the cutting device 25 and the cover 26 can move back and forth together.

The sheet forming machine 23 has a plurality of forming rolls 28 around which the resin sheet is laid, and forms the resin sheet 12 extruded from the die 19 into a sheet-shaped product. The accompanying drawings illustrate a first forming roll 28a, a second forming roll 28b and a third forming roll 28c arranged in this order. The number of forming rolls can be arbitrarily determined according to the specifications of the sheet to be formed. For example, the sheet forming machine 23 may have only one forming roll.

The sheet receiving device 24 has a receiver 29 that receives a part 37 of the resin sheet 12 from the die 19 that is extruded immediately after the start of operation and has unstable properties. The receiver 29 can have any configuration as far as the receiver 29 can receive the part 37 of the resin sheet 12. In particular, the receiver 29 preferably has a fence-like or screen-like structure along the periphery thereof in order to prevent the resin sheet 12 from dropping over the edge of the receiver 29. The receiver 29 is raised and lowered by an elevator 30 shown in FIG. 4.

The cutting device 25 and the cover 26 will be described in detail. The transfer cart 27 of the forming device 14 is provided with a support arm 32 extending in the vertical direction, as shown in FIG. 5. One or more support arms 32 support the cover 26, which has a platelike shape. The cover 26 is provided between the receiver 29 and the first forming roll 28a and covers the first forming roll 28a, thereby preventing the resin sheet 12 extruded from the die 19, in particular, the part 37 of the resin sheet 12 having unstable properties, from attaching to the forming roll 28, in particular, the first forming roll 28a.

The cover 26 is arranged in a downward-tilted orientation tilted toward the receiver 29 of the sheet receiving device 24. Therefore, the cover 26 can receive the resin sheet 12 from above, in particular, the cut and removed part 37 of the resin sheet 12 having unstable properties, and let the resin sheet 12 slide downward to the receiver 29. The surface of the cover 26 preferably has asperities so that the contact area with the resin sheet 12 can be decreased to facilitate the sliding of the resin sheet 12. Specifically, the cover 26 preferably has a surface structure similar to that of a checkered steel plate or the like. However, the cover 26 has an improved slipperiness because of the decrease in contact area, which is opposite to the slip resistance effect of the typical checkered steel plate. Alternatively, the cover 26 may be provided with an appropriate material that improves slipperiness and has heat resistance. For example, the cover 26 may be subjected to fluorine coating or ceramic coating.

The cutting device 25 cuts and removes the part 37 having unstable properties of the resin sheet 12 extruded from the die 19, as described. The cutting device 25 can have any configuration as far as the cutting device 25 can achieve this object. The cutting device 25 shown in the drawings is formed by a linear sheathed heater arranged slightly above the cover 26, as shown in detail in FIG. 5. The cutting device 25 formed by a sheathed heater can fuse the resin sheet 12 in the width direction thereof by heating the resin sheet 12. By cutting the resin sheet 12 by fusion, the resin sheet 12 can be easily cut without applying a mechanical force to the resin sheet 12, which is soft at high temperature. In this process, the resin sheet 12 is stretched downward and thinned while the receiver 29 is lowered by the elevator 30. Therefore, the resin sheet 12 can be more easily cut or fused compared with the resin sheet 12 having the original greater thickness.

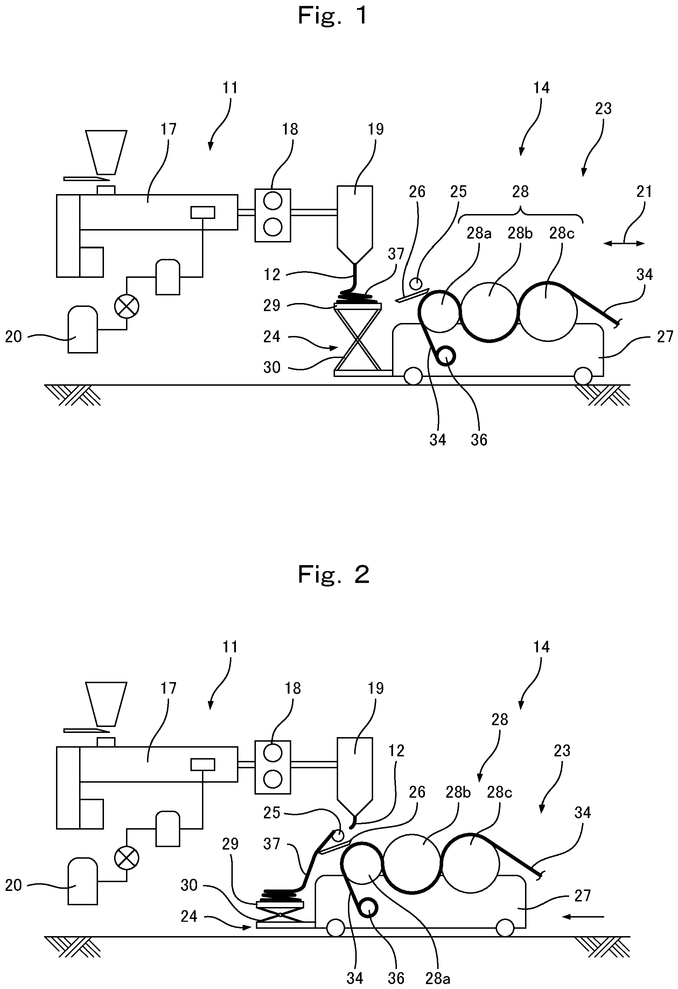

As shown in FIGS. 1 and 5, a lead film 34 is set on the sheet forming machine 23 in advance for starting up an extrusion forming process for the resin sheet. The resin sheet 12 at high temperature extruded from the die 19 attaches to the lead film 34, and is guided to the sheet forming machine 23. To this end, the lead film 34 is preferably made of the same resin as the resin forming the resin sheet 12 or a resin having a compatibility with the resin forming the resin sheet 12.

As shown in FIG. 5, the lead film 34 is provided with a reinforcement member 35 for reinforcing the lead film 34. The reinforcement member 35 reinforces the lead film 34 in the direction of conveyance of the resin sheet 12 in the sheet forming machine 23. Therefore, the reinforcement member 35 may be formed by a heat-resistant tape or a strip of flame-retarded fabric applied to the lead film 34 in the longitudinal direction of the lead film 34, for example. A requirement about the heat resistance is that the reinforcement member 35 is not melted or softened at the melting point of the resin forming the resin sheet 12. That is, the reinforcement member 35 need to be formed by a resin having a higher melting point or softening point than the resin forming the resin sheet 12. In the example shown in the drawings, three tape-like reinforcement members 35 are applied to the lead film 34 at intervals in the width direction of the lead film 34.

The lead film 34 may be reinforced in the direction of conveyance of the resin sheet 12 in other manners than that described above. For example, the opposite lateral edges of the lead film 34 extending in the direction of conveyance of the resin sheet 12 may be thickened, or the opposite lateral edges of the lead film 34 may be folded and doubled.

A method for starting up the device for extruding the resin sheet 12 will be described in detail. As shown in FIGS. 1 and 5, the lead film 34 reinforced with the reinforcement member 35 is first set in the sheet forming machine 23. Specifically, a predetermined length of the lead film 34 is drawn from a roll 36 shown in FIG. 1. The lead film 34 is laid around the forming rolls 28 of the sheet forming machine 23 in the same path as the resin sheet 12 that is to be supplied to and formed by the sheet forming machine 23.

The lead film 34 can be guided by any arrangement as far as the lead film 34 is set to be guided to the sheet forming machine 23. For example, a string-like traction member for pulling the lead film 34 may be connected to a downstream-side part of the lead film 34. In that case, the string-like traction member is laid around the forming rolls 28. The lead film 34 has only to reach the position where the resin sheet 12 is fed when the resin sheet 12 is fed to the forming rolls 28.

Then, the extrusion device 11 starts operating and starts extruding the resin sheet 12 in the melted state downward from the die 19. At this time, the forming device 14 has been moved so that the receiver 29 of the sheet receiving device 24 is located directly below the die 19 as shown in FIGS. 1 and 5. Then, the part 37 of the resin sheet 12 extruded downward from the die 19 that is extruded immediately after the start of operation and has unstable properties, that is, the part of the resin sheet 12 that is inappropriate to be passed through the sheet forming machine 23 is received by the receiver 29.

Here, the appropriate state of the resin sheet 12 to be passed through the sheet forming machine 23 refers to a state where the melted resin is discharged from the die 19 over the entire width thereof. The inappropriate state of the resin sheet 12 to be passed through the sheet forming machine 23 refers to a state where the resin is discharged from only a part of the die 19 along the width thereof or a state where the resin discharged from the die 19 contains a significant amount of air or water and the sheet has many pores, for example.

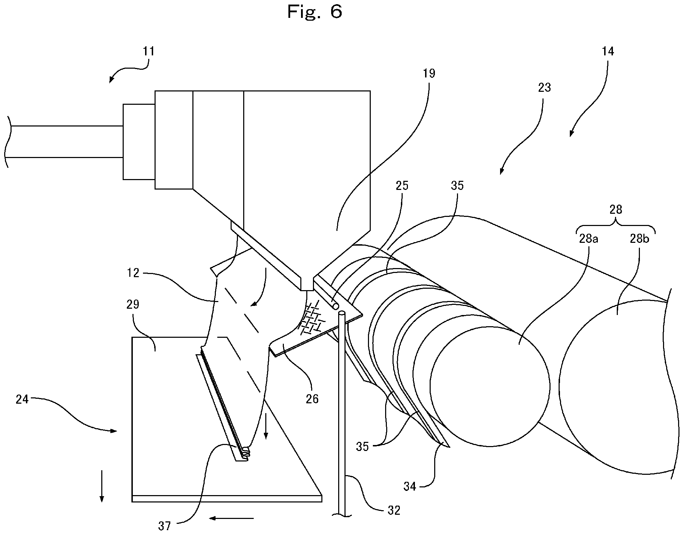

The transfer cart 27 of the forming device 14 is then moved in the direction to bring the cover 26 closer to the resin sheet 12. Then, as shown in FIG. 6, the resin sheet 12, which has been directly dropping from the die 19 onto the receiver 29 of the sheet receiving device 24, is received by the cover 26.

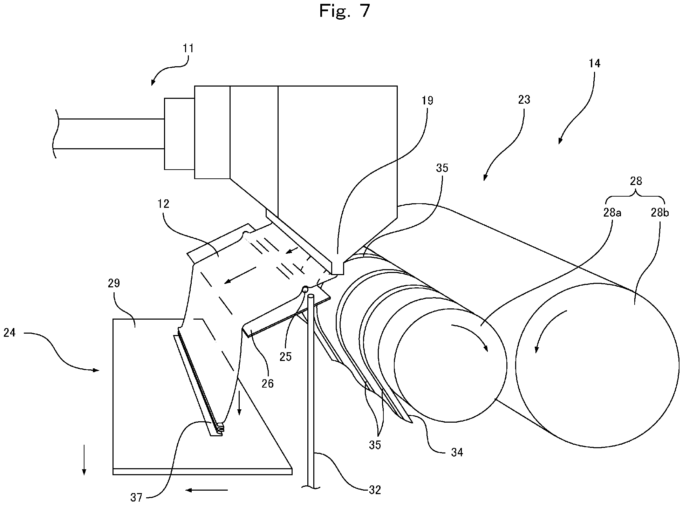

Then, the transfer cart 27 of the forming device 14 is further moved. At the same time, the receiver 29 is lowered by the elevator 30. Then, the resin sheet 12 being extruded from the die 19 is pulled downward and stretched and is thinned. In this state, as shown in FIGS. 2 and 7, the cutting device 25 formed by a sheathed heater at high temperature comes into contact with the resin sheet 12 and fuses and cuts the resin sheet 12 along the width direction. In this way, the whole of the part 37 of the resin sheet 12 that is extruded immediately after the start of operation and has unstable properties is guided by the downward-tilted cover 26 and drops from the cover 26 to the receiver 29 of the sheet receiving device 24. The part 37 dropping is received by the receiver 29. The cover 26 effectively prevents the part 37 having unstable properties from coming into contact with the forming roll 28 and entering the sheet forming machine 23. In this way, only the part of the resin sheet 12 having stable properties remains directly below the die 19.

The timing of lowering the receiver 29 can be changed as required. The receiver 29 may be lowered before or after the forming device 14 moves. For example, when the resin is easily cut because of the kind or properties thereof, the resin sheet 12 can be cut without lowering the receiver 29.

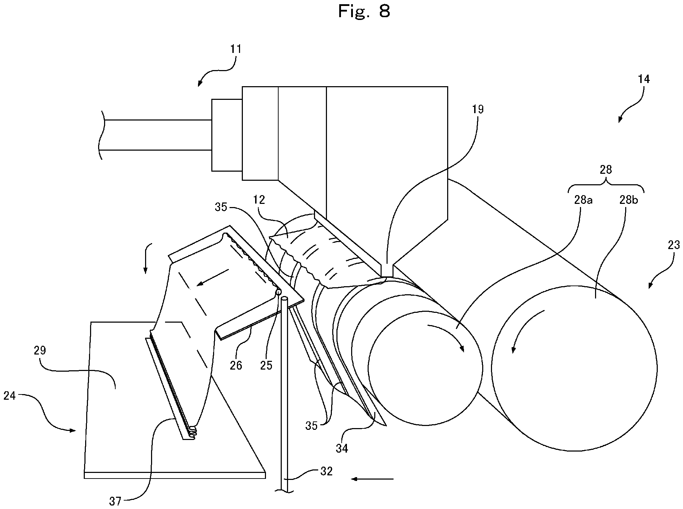

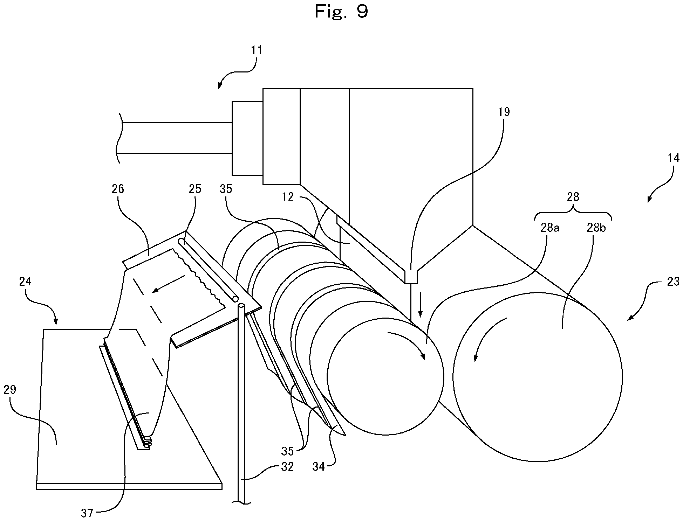

As shown in FIG. 8, the remaining resin sheet comes off the cover 26 as the forming device 14 further moves, and integrally attaches to the lead film 34 laid around the first forming roll 28a. At this point, if the sheet forming machine 23 starts operating to rotate the forming rolls 28, the lead film 34 and the resin sheet 12 integrated with each other are fed between the first forming roll 28a and the second forming roll 28b of the sheet forming machine 23, as shown in FIGS. 3 and 9.

Depending on the kind of the resin, when the resin sheet 12 is in the appropriate state to be passed between the rolls of the sheet forming machine 23 for forming immediately after the start of extrusion, the resin sheet 12 immediately after the start of extrusion can be directly fed to the lead film 34 set in the roll-type sheet forming machine 23, as an alternative to the manner described above.

The forming device 14 is then stopped moving, and the lead film 34 is cut with an appropriate unit near the roll 36. After that, only the resin sheet 12 supplied from the die 19 is fed to the sheet forming machine 23, and a sheet-shaped product is continuously formed. The formed sheet-shaped product is wound in a roll form by the winding device 15. A predetermined length of lead film 34 may be prepared in advance, and the whole of the lead film 34 may be fed without cutting. As described, the resin sheet 12 is not limited to the sheet form as far as the resin sheet 12 is flexible and may be a film, a stack of films or the like.

Thus, the device for extruding resin sheet can be smoothly and safely started up by simply starting the device without much effort.

Each of the devices described can have any other configuration that can implement the method for starting up the device for extruding resin sheet according to the present invention, and can have any other appropriate configuration than the specific configuration described as far as the device is included in the manufacturing device for a sheet-shaped resin product according to the present invention.

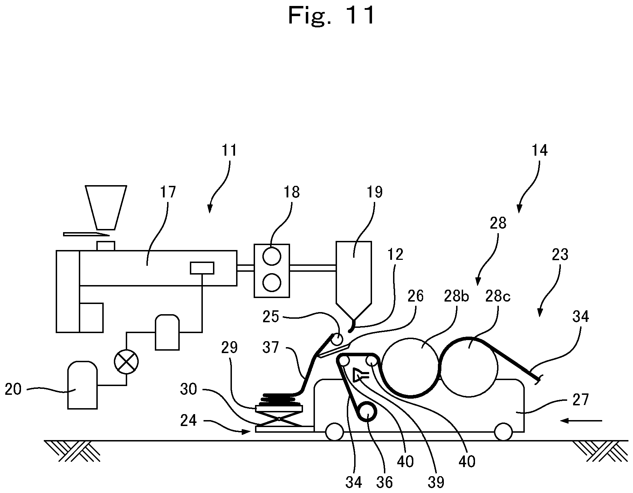

FIG. 11 shows a variation of the sheet forming machine 23. The sheet forming machine 23 shown in FIG. 11 includes an air knife 39 and guide rolls 40, instead of the first forming roll 28a. The guide rolls 40 allow the lead film 34 to be conveyed in a predetermined path so that the lead film 34 receives the resin sheet 12 from the die 19, thereby preventing the resin sheet 12 from attaching to an undesired part of the sheet forming machine 23. After that, the air knife 39 presses the resin sheet 12 against the second forming roll 28b for forming. In this case, in order to ensure that the resin sheet 12 is prevented from attaching to an undesired part of the sheet forming machine 23, the guide rolls 40 that guide the lead film 34 are preferably located above the air knife 39 as shown in the drawing.

In the variation shown in FIG. 11, all the technical features described with reference to FIGS. 1 to 10 can be combined in a technically appropriate manner.

As a device that has a function equivalent to that of the air knife described, another device, such as an air chamber or a peening device, may be provided. Alternatively, in some cases, such a device may not be used, and the first forming roll 28a may also be omitted. In that case, a guide roll similar to the guide roll described or the like is preferably used to pass the lead film 34 in such a manner that the melted resin, that is, the resin sheet 12 does not come into contact with the equipment in the sheet forming machine 23.

Furthermore, as an alternative configuration, the cutting device that cuts the resin sheet 12 may be provided on the roll-type sheet forming machine 23 as described or may be configured to move independently from the sheet forming machine 23. Alternatively, the die 19, rather than the cutting device, may move. The cutting device is preferably arranged in a direction substantially perpendicular to the direction of extrusion of the resin sheet 12 to cover the entire width of the resin sheet 12.

As a variation of the cutting device 25, for example, a cutting blade extending in the width direction of the resin sheet 12 may be provided at an upper part of the cover 26, and the cutting blade may come into contact with the resin sheet 12 when the cover 26 comes close to the resin sheet 12. The cutting blade need not be sharp and may be formed by bending an edge of the cover along the width direction of the resin sheet. As a further alternative, a mechanism may be provided that slides the cutting blade directly below the die 19 in the width direction of the resin sheet.

An example has been described in which the forming device 14 is configured as the transfer cart 27 and the sheet receiving device 24 can move with the forming device 14 in the horizontal direction. However, the present invention is not limited to this. For example, a pit may be formed in the floor, and the sheet receiving device may be installed in the pit so that the sheet receiving device can be lowered and stored below the sheet forming machine 23 when cutting the resin. In that case, the sheet receiving device need not be horizontally moved.

The roll-type sheet forming machine 23 and the die 19 have only to move relatively with respect to each other, and at least one of the roll-type sheet forming machine 23 and the die 19 may be able to move. The sheet receiving device 24 need not move, as far as the sheet receiving device 24 is disposed at a position where the sheet receiving device 24 does not interfere with other devices.

Depending on the kind of the resin, when the resin sheet 12 is in the appropriate state to be passed through the sheet forming machine 23 for forming immediately after the start of extrusion, the resin sheet 12 can be directly fed to the lead film 34 set in the roll-type sheet forming machine 23.

The following are preferred embodiments of the present invention.

(1) A method for starting up a device for extruding resin sheet, wherein
   when a melted resin is extruded in a sheet form from a die of an extrusion device, and a resin sheet extruded is passed through a roll-type sheet forming machine in a forming device to form a sheet-shaped product,
   a lead film is set on the roll-type sheet forming machine in advance, the lead film being conveyed forward by a rotation of a forming roll in the roll-type sheet forming machine, and the resin sheet guided to the sheet forming machine attaches to the lead film.

The lead film is preferably made of the same resin as the resin forming the resin sheet or a resin having a compatibility with the resin forming the resin sheet.

(2) The method for starting up a device for extruding resin sheet according to (1), wherein a part of the resin sheet extruded from the die that is not appropriate to be passed through the sheet forming machine is received by a sheet receiving device.

(3) The method for starting up a device for extruding resin sheet according to (2), wherein the part of the resin sheet received by the sheet receiving device is cut and removed.

(4) The method for starting up a device for extruding resin sheet according to (3), wherein a remaining part of the resin sheet remaining after the cutting is guided to the sheet forming machine.

(5) The method for starting up a device for extruding resin sheet according to any one of (2) to (4), wherein the sheet receiving device receiving the resin sheet is lowered.

(6) The method for starting up a device for extruding resin sheet according to (5), wherein the resin sheet being extruded downward from the die is stretched downward and thinned by lowering the sheet receiving device.

(7) The method for starting up a device for extruding resin sheet according to any one of (1) to (6), wherein the die from which the resin sheet is being extruded is relatively moved with respect to the sheet receiving device and the roll-type sheet forming machine from a position above the sheet receiving device to a position above the roll-type sheet forming machine.

(8) The method for starting up a device for extruding resin sheet according to (7), wherein the resin sheet is brought into contact with and cut by a cutting device by relatively moving the die from which the resin sheet is being extruded with respect to the sheet receiving device and the roll-type sheet forming machine from a position above the sheet receiving device to a position above the roll-type sheet forming machine.

(9) The method for starting up a device for extruding resin sheet according to any one of (1) to (8), wherein the cut and removed part of the resin sheet is prevented from attaching to the forming roll of the forming device.

(10) The method for starting up a device for extruding resin sheet according to (9), wherein a cover provided on the forming device prevents the cut and removed part of the resin sheet from attaching to the forming roll of the forming device.

(11) The method for starting up a device for extruding resin sheet according to any one of (1) to (10), wherein the lead film used is reinforced in a direction of sheet conveyance of the roll-type sheet forming machine. Preferably, the lead film is provided with a reinforcement member for reinforcing the lead film or has a reinforced structure in which the thickness of the lead film is partially increased. The reinforcement member or the reinforced structure preferably reinforces the lead film in the direction of conveyance of the resin sheet in the sheet forming machine.

(12) A manufacturing device for manufacturing a sheet-shaped resin product, including:
an extrusion device provided with a die from which a melted resin is extruded in a sheet form; and
a roll-type sheet forming machine that forms an extruded resin sheet into a sheet-shaped product,
wherein a lead film can be set on the roll-type sheet forming machine in advance, the lead film being conveyed forward by a rotation of a forming roll in the sheet forming machine, and the resin sheet received by the roll-type sheet forming machine attaching to the lead film.

The lead film is preferably made of the same resin as the resin forming the resin sheet or a resin having a compatibility with the resin forming the resin sheet.

(13) The manufacturing device for manufacturing a sheet-shaped resin product according to (12), including a sheet receiving device that receives a part of the resin sheet extruded from the die that is not appropriate to be passed through the sheet forming machine. The sheet receiving device can have a fence-like or screen-like structure along the periphery thereof in order to prevent the resin sheet from dropping over the edge of the sheet receiving device.

(14) The manufacturing device for manufacturing a sheet-shaped resin product according to (13), including a cutting device that cuts and removes the part of the resin sheet received by the sheet receiving device. The cutting device can be formed by a sheathed heater or a cutter. The sheathed heater fuses and cuts the resin sheet. The cutting device is preferably arranged in a direction substantially perpendicular to the direction of extrusion of the resin sheet to cover the entire width of the sheet. The cutter need not be sharp as a cutting blade. For example, a structure formed by bending an edge of a cover along the width direction of the resin sheet is possible. As a further alternative, a mechanism may be provided that slides the cutting blade directly below the die in the width direction of the resin sheet.

(15) The manufacturing device for manufacturing a sheet-shaped resin product according to (14), wherein the roll-type sheet forming machine receives a remaining part of the resin sheet that remains after the part of the resin sheet that is not appropriate to be passed through the sheet forming machine is cut and removed by the cutting device.

(16) The manufacturing device for manufacturing a sheet-shaped resin product according to any one of (13) to (15), wherein the die is capable of being relatively moved with respect to the sheet receiving device and the roll-type sheet forming machine from a position above the sheet receiving device to a position above the roll-type sheet forming machine.

(17) The manufacturing device for manufacturing a sheet-shaped resin product according to (14) or (15), wherein the die is capable of being relatively moved with respect to the sheet receiving device and the roll-type sheet forming machine from a position above the sheet receiving device to a position above the roll-type sheet forming machine, the cutting device is disposed at a position where the extruded resin sheet comes into contact with the cutting device while the die is relatively moved with respect to the sheet receiving device and the roll-type sheet forming machine from the position above the sheet receiving device to the position above the roll-type sheet forming machine. The cutting device may be provided on the roll-type sheet forming machine or may be configured to move independently from the sheet forming machine. Alternatively, the die, rather than the cutting device, may move.

(18) The manufacturing device for manufacturing a sheet-shaped resin product according to any one of (13) to (17), wherein while receiving the resin sheet, the sheet receiving device is lowered.

(19) The manufacturing device for manufacturing a sheet-shaped resin product according to (18), wherein the resin sheet being extruded downward from the die is stretched downward and thinned by the sheet receiving device being lowering while receiving the resin sheet.

(20) The manufacturing device for manufacturing a sheet-shaped resin product according to any one of (14) to (19), wherein the sheet forming machine includes an attachment prevention member that prevents the cut and removed part of the resin sheet from attaching to the forming roll of the sheet forming machine.

(21) The manufacturing device for manufacturing a sheet-shaped resin product according to (20), wherein the attachment prevention member is a cover. The cover can be arranged in a downward-tilted orientation tilted toward the sheet receiving device. The surface of the cover preferably has asperities so that the contact area with the resin sheet can be decreased to facilitate the sliding of the resin sheet. The cover can be provided with an appropriate material that improves slipperiness and has heat resistance. For example, the cover is preferably subjected to fluorine coating or ceramic coating.

(22) The manufacturing device for manufacturing a sheet-shaped resin product according to any one of (12) to (21), wherein a lead film reinforced in a direction of sheet conveyance of the roll-type sheet forming machine can be set on the roll-type sheet forming machine in advance. Preferably, the lead film is provided with a reinforcement member for reinforcing the lead film or has a reinforced structure in which the thickness of the lead film is partially increased. The reinforcement member or the reinforced structure preferably reinforces the lead film in the direction of conveyance of the resin sheet in the sheet forming machine.

(23) The manufacturing device for manufacturing a sheet-shaped resin product according to any one of (12) to (22), wherein the sheet forming machine includes an air knife and a guide roll, the lead film is conveyed by the guide roll in a predetermined path and receives the resin sheet from the die, and the air knife then presses the resin sheet against the forming roll for forming.

(24) The manufacturing device for manufacturing a sheet-shaped resin product according to (23), wherein the guide roll that guides the lead film is located above the air knife.

(25) The manufacturing device for a sheet-shaped resin product according to (23) or (24), wherein instead of the air knife, an air chamber or a peening device is provided.

### List of Reference Signs

- 11: extrusion device
- 12: resin sheet
- 14: forming device
- 19: die
- 23: sheet forming machine
- 24: sheet receiving device
- 25: cutting device
- 26: cover
- 27: transfer cart
- 28: forming roll
- 29: receiver
- 30: elevator
- 34: lead film
- 35: reinforcement member
- 37: part having unstable properties

## Claims

1. A method for starting up a device for extruding resin sheet, wherein
when a melted resin is extruded in a sheet form from a die of an extrusion device, and a resin sheet extruded is passed through a roll-type sheet forming machine in a forming device to form a sheet-shaped product,
a lead film is set on the roll-type sheet forming machine in advance, the lead film being conveyed forward by a rotation of a forming roll in the roll-type sheet forming machine, and the resin sheet guided to the sheet forming machine attaches to the lead film.

2. The method for starting up a device for extruding resin sheet according to claim 1, wherein a part of the resin sheet extruded from the die that is not appropriate to be passed through the sheet forming machine is received by a sheet receiving device,
the part of the resin sheet received by the sheet receiving device is cut and removed, and a remaining part of the resin sheet remaining after the cutting is guided to the sheet forming machine.

3. The method for starting up a device for extruding resin sheet according to claim 2, wherein the sheet receiving device receiving the resin sheet is lowered to stretch downward the resin sheet being extruded downward from the die to thin the resin sheet.

4. The method for starting up a device for extruding resin sheet according to any one of claims 1 to 3, wherein the die from which the resin sheet is being extruded is relatively moved with respect to the sheet receiving device and the roll-type sheet forming machine from a position above the sheet receiving device to a position above the roll-type sheet forming machine to bring the resin sheet into contact with a cutting device to cut the resin sheet.

5. The method for starting up a device for extruding resin sheet according to any one of claims 1 to 3, wherein a cover provided on the forming device prevents the cut and removed part of the resin sheet from attaching to the forming roll of the forming device.

6. The method for starting up a device for extruding resin sheet according to any one of claims 1 to 3, wherein the lead film used is reinforced in a direction of sheet conveyance of the roll-type sheet forming machine.

7. A manufacturing device for manufacturing a sheet-shaped resin product, comprising:
an extrusion device provided with a die from which a melted resin is extruded in a sheet form; and
a roll-type sheet forming machine of a forming device that forms an extruded resin sheet into a sheet-shaped product,
wherein a lead film can be set on the roll-type sheet forming machine in advance, the lead film being conveyed forward by a rotation of a forming roll in the sheet forming machine, and the resin sheet received by the roll-type sheet forming machine attaching to the lead film.

8. The manufacturing device for manufacturing a sheet-shaped resin product according to claim 7, comprising:
a sheet receiving device that receives a part of the resin sheet extruded from the die that is not appropriate to be passed through the sheet forming machine; and
a cutting device that cuts and removes the part of the resin sheet received by the sheet receiving device,
wherein the die is capable of being relatively moved with respect to the sheet receiving device and the roll-type sheet forming machine from a position above the sheet receiving device to a position above the roll-type sheet forming machine, and
the roll-type sheet forming machine receives a remaining part of the resin sheet that remains after the part of the resin sheet that is not appropriate to be passed through the sheet forming machine is cut and removed by the cutting device.

9. The manufacturing device for manufacturing a sheet-shaped resin product according to claim 8, wherein while receiving the resin sheet, the sheet receiving device is lowered to stretch downward the resin sheet being extruded downward from the die to thin the resin sheet.

10. The manufacturing device for manufacturing a sheet-shaped resin product according to claim 8 or 9, wherein the cutting device is disposed at a position where the extruded resin sheet comes into contact with the cutting device while the die is relatively moved with respect to the sheet receiving device and the roll-type sheet forming machine from the position above the sheet receiving device to the position above the roll-type sheet forming machine.

11. The manufacturing device for manufacturing a sheet-shaped resin product according to any one of claims 7 to 9, wherein the forming device includes a cover that prevents the cut and removed part of the resin sheet from attaching to the forming roll of the forming device.

12. The manufacturing device for a sheet-shaped resin product according to any one of claims 7 to 9, wherein a lead film reinforced in a direction of sheet conveyance of the roll-type sheet forming machine can be set on the roll-type sheet forming machine in advance.
